# EUROPÄISCHE PATENTANMELDUNG

(11) **EP 3 447 462 A1**
(43) Veröffentlichungstag der Anmeldung: **27.02.2019**
(21) Anmeldenummer: 18188343.0
(22) Anmeldetag: 09.08.2018
(51) Int. Cl.: G01L 1/14, B25J 19/06, F16P 3/12, G01L 5/00

(54) **SCHUTZEINRICHTUNG FÜR EIN BAUTEIL MIT KAPAZITIV-TAKTILER KOLLISIONSERFASSUNG**

(30) Priorität: 22.08.2017 DE 102017119153
(71) Anmelder: Mayser Holding GmbH & Co. KG, 88161 Lindenberg i. Allgäu (DE)
(72) Erfinder: Jordan, Manfred, 88161 Lindenberg (DE)
(74) Vertreter: Kaufmann, Sigfrid

(57) **Zusammenfassung**

Die Erfindung betrifft eine Schutzeinrichtung mit integrierter, kapazitiv-taktiler, d. h. kapazitiv-taktiler, Kollisionserfassung zum Erfassen einer Kollision zwischen einem Bauteil und einem Gegenstand oder einer Person. Das Bauteil kann z. B. ein motorgetrieben bewegbares Teil einer Maschine sein, etwa ein Roboterarm.

Die Schutzeinrichtung umfasst eine Auswerteeinheit (5) und einen Sicherheitsüberzug (1), bestehend aus einem elastisch verformbaren Abstandskörper (2) aus einem Schaummaterial oder einem Abstandsgewirk mit zwei darauf aufgebrachten Elektroden (3) und einer Außenhülle (4). Der Abstandskörper (2) weist auf seiner Oberseite (7) eine höhere Elastizität als an seiner Unterseite (8) auf. Die Auswerteeinheit (5) ist mit den Elektroden (3) elektrisch verbunden, wobei die Auswerteeinheit (5) eingerichtet ist, nach Anlegen einer Gleich- oder Wechselspannung an die Elektroden (3) ein Kollisionsereignis aus einer Änderung der Kapazität oder des Stromflusses zu ermitteln.

## Beschreibung

Die Erfindung betrifft eine Vorrichtung mit integrierter, kapazitiv-taktiler, d. h. kaptiler, Kollisionserfassung zum Schutze von Personen und ortsfesten oder autonom bewegten Hindernissen vor ortsfesten oder autonom bewegten Handhabungsgeräten wie Fertigungs-, Transport-, Inspektions- oder Serviceroboter und ihrer Manipulatoren vor Kollisionen.

Der Schutz vor Kollisionen ist z. B. in der Medizintechnik und beim Einsatz von Industrierobotern von großer Bedeutung. So muss z. B. beim Einsatz von medizinischen Geräten mit motorgetrieben bewegbaren Bauteilen sichergestellt werden, dass die Bewegung eines solchen Bauteils bei Kontakt bzw. Kollision mit einer Person (z. B. einem mittels des medizinischen Geräts zu untersuchenden Patienten) weder zu Verletzungen der Person noch zu Schäden an dem Bauteil führen. Als ein anderes Beispiel muss beim Einsatz von Industrierobotern mit bewegbaren Bauteilen (z. B. einem Roboterarm) sichergestellt werden, dass bei einem planmäßigen oder auch außerplanmäßigen Kontakt mit einem Gegenstand oder einer Person das Schadens- bzw. Verletzungsrisiko minimiert wird.

Es ist bekannt, die Manipulatoren eines Roboters mit starren oder weichen Schutzhüllen zu umgeben. Durch die Schutzhüllen soll der mögliche Aufprall gedämpft werden. Zur Erzielung einer hohen Dämpfungswirkung ist hierbei eine relativ wuchtige Schutzhülle erforderlich. Aufgrund der zusätzlichen Masse durch die Schutzhüllen ist die Bewegungsgeschwindigkeit der Manipulatoren beschränkt, da andernfalls der Impuls der Manipulatoren zu groß wäre und Verletzungen hervorgerufen würden. Außerdem bieten derartige Schutzhüllen lediglich einen passiven Schutz.

Zum aktiven Erfassen einer Kollision eines flächigen Bauteils können drucksensitive Schaltmatten eingesetzt werden. Die DE 10 2010 010 873 A1 beschreibt die Verwendung einer elektrischen Schaltmatte als drucksensitive Schicht in einer Vorrichtung zur Erkennung einer Kollision, wobei die Schaltmatte z. B. an der Außenseite eines Verkleidungsteils eines medizinischen Geräts angeordnet ist. Derartige Schaltmatten leiden jedoch an unzureichender Flexibilität und Robustheit.

Aus EP 1 601 555 B1 ist ein kapazitives Überwachungssystem zur Erfassung einer Fahrzeugsitzbelegung bekannt. Im Fahrzeugsitz ist eine Sitzelektrode angeordnet, die eine unterseitige elektrische Abschirmung sowie eine zur Sitzfläche ausgerichtete Fühlelektrode umfasst. Sowohl als Fühlelektrode als auch zur elektrischen Abschirmung kann eine Metallfolie, ein Metalldrahttextil oder ein metallbeschichtetes Textil oder Vlies eingesetzt werden. Die Sitzelektrode wird mit einer Wechselspannung beaufschlagt, wobei der durch eine sitzende Person über die Sitzelektrode abfließende Wechselstrom erfasst wird.

Aus der DE 10 2008 034 937 A1 ist ferner ein Abstandsgewirke als Drucksensor zur Verwendung in Fahrzeugsitzen bekannt. Das Abstandsgewirke weist auf seiner Ober- und Unterseite elektrisch leitende Flächen auf, die jeweils von eingewebten Leiterfäden gebildet werden. Hierbei fungiert die leitende Fläche der Unterseite als Abschirmung, um fehlerhafte Messungen mittels der leitenden Fläche der Oberseite zu vermeiden.

DE 10 2015 014 317 A1 beschreibt ein Sensorsystem und ein Verfahren zum kapazitiven und ortsaufgelösten Detektieren einer Annäherung von Objekten an z. B. einen Roboter und dessen Berührung. Dieses Sensorsystem umfasst Sensormodule, die jeweils aus einer Deckschicht mit einer Vielzahl von elektrisch leitfähigen Deckelelektroden, einer elektrisch leitfähigen Bodenelektrode sowie einer zwischen der Deckschicht und der Bodenelektrode angeordneten, verformbaren und elektrisch isolierenden Zwischenschicht, bestehen. Die Deckelektroden und die Bodenelektrode bilden jeweils Kondensatoren aus, sodass mittels einer mit diesen verbundenen Auswerteeinheit in der selbst-kapazitiven Konfiguration oder der beidseitig-kapazitiven Konfiguration ortsaufgelöst eine Annäherung oder ein Kontaktereignis detektierbar ist.

Aufgabe der Erfindung ist es, eine Schutzeinrichtung mit kapazitiv-taktiler Kollisionserfassung bereitzustellen, die bei guter Robustheit sowohl einen passiven Schutz bietet als auch aktiv eine Berührung detektiert, wobei sie unkompliziert aufgebaut und somit kostengünstig herstellbar sein soll. Zusätzlich soll die Schutzeinrichtung flexibel an beliebige Oberflächengeometrien der mit ihr auszustattenden Bauteile anpassbar sein, wobei die passive Schutzkomponente ein geringes Gewicht besitzen soll.

Diese Aufgabe wird durch die Schutzeinrichtung mit den Merkmalen des ersten Anspruches gelöst; vorteilhafte Ausführungsformen sind Gegenstand der Unteransprüche.

Die erfindungsgemäße Schutzeinrichtung weist wenigstens einen flexiblen, zumindest auf einen Teil der Oberfläche des mit der Schutzeinrichtung auszustattenden Bauteils formangepasst aufbringbaren, elastisch komprimierbaren Sicherheitsüberzug mit Kollisionserfassung und eine mit der Kollisionserfassung verbundene Auswerteeinheit auf.

Im Folgenden wird der Einfachheit halber meist im Singular von "dem Sicherheitsüberzug" gesprochen, womit jedoch die jeweils vorliegenden Sicherheitsüberzüge bezeichnet sind und somit auch der Fall von mehreren Sicherheitsüberzügen der Schutzeinrichtung umfasst sein soll, soweit sich nicht aus dem Kontext etwas anderes ergibt.

Der Sicherheitsüberzug umfasst wenigstens einen, weitestgehend flächenhaft ausgebildeten Abstandskörper aus einem elastisch komprimierbaren, elektrisch isolierenden Material, welcher ein Bestandteil der Kollisionserfassung bzw. Kollisionserfassungsvorrichtung ist. Der Abstandskörper besitzt z. B. die Form einer Platte oder einer Schale. Aufgrund dieser geometrischen Form weist der Abstandskörper zwei großflächige Oberflächenbereiche auf, die im Folgenden als Oberseite und als Unterseite bezeichnet werden, wobei im bestimmungsgemäßen Gebrauch die Unterseite in Richtung hin zu dem Bauteil und die Oberseite in Richtung weg von dem Bauteil weist.

Die Kollisionserfassung weist zudem eine erste und eine zweite, jeweils elastisch verformbare Elektrode auf, wobei die erste Elektrode ganzflächig auf der Unterseite des Abstandskörpers und die zweite Elektrode ganzflächig auf der Oberseite des Abstandskörpers aufgebracht ist. Die Elektroden können z. B. mittels Klebens an der Ober- bzw. Unterseite der Abstandsschicht befestigt sein. Vorzugsweise sind von den beiden Elektroden die Oberflächen der Unter- bzw. Oberseite jeweils ganzflächig überdeckt.

Unter dem Begriff "Elektrode" wird im Rahmen der vorliegenden Erfindung eine Materiallage verstanden, die eine flächige Form aufweist, wobei ein elektrischer Strom innerhalb der Materiallage fließen kann. Die Ausdehnung der Materiallage, d. h. elektrisch leitfähigen Schicht, ist in zwei Dimensionen deutlich größer als in der dritten Dimension, was aber natürlich nicht bedeutet, dass in der dritten Dimension eine Ausdehnung von Null oder eine infinitesimal geringe Ausdehnung vorliegen würde. Die elektrisch leitfähige Schicht kann eine (innere) Struktur von einzelnen, räumlich getrennten Leiterbahnen, z. B. Litzen oder Metallfäden, umfassen, sie kann aber auch eine gänzlich elektrisch leitfähige Folie, z. B. eine Metallfolie, sein.

Erfindungsgemäß ist der Abstandskörper aus einem elastisch komprimierbaren Material, wobei seine Elastizität an der Unterseite geringer als an der Oberseite ist, d. h., der Abstandskörper ist im Bereich der Unterseite härter als im Bereich der Oberseite. Diese Änderung der Elastizität bzw. Härte kann sowohl sprunghaft, d. h. an einer oder mehreren Grenzflächen innerhalb des Abstandskörpers, als auch kontinuierlich, d. h. stetig, von der Unter- zu der Oberseite erfolgen. Zur Vereinfachung wird hierin von der an der Unterseite angeordneten, ersten Schicht und der an der Oberseite angeordneten, zweiten Schicht gesprochen, wobei durch die Verwendung des Begriffes "Schicht" generell ein flächenhaft ausgebildeter Bereich beschrieben wird, der in Richtung zum Zentrum des Abstandskörpers nicht notwendigerweise eine scharfe Grenze bzw. eine sprunghafte Änderung der Eigenschaften aufweisen muss.

Insbesondere kann der Abstandskörper auch vielschichtig aufgebaut sein, wobei jede der Schichten eine gegenüber den benachbarten Schichten unterschiedliche Elastizität aufweist. Hierbei ist jedoch immer die Schicht an der Unterseite härter als die Schicht an der Oberseite. Eine zwischen diesen beiden Schichten angeordnete ZwischenSchicht kann auch eine höhere Elastizität aufweisen, d. h. weicher sein, als die Schicht an der Oberseite.

Des Weiteren weist der Sicherheitsüberzug der Schutzeinrichtung eine elastisch verformbare, vorzugsweise elektrisch isolierende Außenhülle auf, die derart ausgebildet und angeordnet ist, dass von ihr der Abstandskörper mit den beiden Elektroden - zumindest auf den Außenflächen der Ober- und der Unterseite - vollständig sowie flüssigkeitsdicht überdeckt ist. Vorzugsweise ist die Außenhülle der Außenkontur des Abstandskörpers mit den darauf angebrachten Elektroden formangepasst und, z. B. die Elektroden kontaktierend, auf denselben angeordnet, wobei sie insbesondere stoffschlüssig mit der jeweiligen Außenfläche der Elektroden der Ober- und der Unterseite verbunden sein kann. Die Außenhülle kann z. B. mittels Klebens an den Außenflächen der Elektroden befestigt sein.

Um den Sicherheitsüberzug, beispielsweise einen einstückigen oder einen aus mehreren Einzelstücken bestehenden Sicherheitsüberzug, auf dem Bauteil lösbar befestigen bzw. fixieren zu können, kann der Sicherheitsüberzug Befestigungsmittel aufweisen, sodass ein weitestgehend der Form des Oberflächenbereichs des Bauteils, an der ein Kollisionsschutz vorgesehen ist (im Folgenden als "Kollisionsschutzfläche" bezeichnet), formangepasster Hohlkörper ausbildbar ist, der diese Kollisionsschutzfläche vollständig abdeckt bzw. umschließt.

Die Schutzeinrichtung umfasst außerdem eine Auswerteeinheit, die elektrisch, z. B. mittels entsprechender Elektrokabel, mit den beiden Elektroden jedes Sicherheitsüberzuges verbunden ist.

Bei mehreren Sicherheitsüberzügen der Schutzeinrichtung können diese, d. h. ihre Elektroden, verbunden, d. h. zwischen den Sicherheitsüberzügen kontaktiert, oder innerhalb der Auswerteeinheit gekoppelt werden. Dies kann sowohl seriell, als auch parallel, jeweils für alle unteren bzw. oberen Elektroden erfolgen.

Die Auswerteeinheit ist eingerichtet, an eine oder beide Elektroden eine elektrische Spannung anzulegen, wobei im letzteren Fall die Polarität der Spannung bevorzugt an der oberen Elektrode unterschiedlich zu der Polarität an der unteren Elektrode ist. Hierbei sind von der Auswerteeinheit sowohl eine Gleich- als auch eine Wechselspannung generierbar. Weiterhin ist die Auswerteeinheit eingerichtet, in drei verschiedenen Mess-Konfigurationen bzw. Betriebsmodi betrieben zu werden: dem singulär-kapazitiven Annäherungsmodus, dem beidseitig-kapazitiven Annäherungsmodus und dem beidseitig-kapazitiven Kollisionsmodus.

In dem singulär-kapazitiven Annäherungsmodus und in dem beidseitig-kapazitiven Annäherungsmodus, im Folgenden auch einfach als kapazitiv-taktile Konfiguration bzw. kapazitiv-taktiler Modus bezeichnet, ist es vorteilhafterweise möglich, Annäherungs- und/oder Taktilitäts-Messwerte zu erfassen. In dem beidseitig-kapazitiven Kollisionsmodus ist es möglich, Kollisions-Messwerte zu erfassen.

In dem singulär-kapazitiven Annäherungsmodus wird eine Wechselspannung von der Auswerteeinheit auf zumindest die obere Elektrode des Sicherheitsüberzugs gelegt, aufgrund welcher ein elektrisches Feld um die Elektrode herum aufgebaut wird. Dabei kann die Wechselspannung eine Sinus-Spannung, aber auch eine beliebig andere periodische Spannung, wie z. B. eine Dreiecksspannung, sein. Kollisionspartner in der Umgebung beeinflussen das Feld, was einen kleinen Stromfluss bewirkt. Diese Änderung des Stromflusses kann von der Auswerteeinheit gemessen werden.

In dem beidseitig-kapazitiven Annäherungsmodus wird von der Auswerteeinheit auf beide Elektroden eine Spannung angelegt. Kollisionspartner beeinflussen auch hier das elektrische Feld, was bei anliegender Wechselspannung über eine Strom- oder bei anliegender Gleichspannung über eine Kapazitätsmessung feststellbar ist.

In dem kapazitiv-taktilen Modus, d. h. einem der beiden Annäherungsmodi, ist es also möglich, sowohl eine Annäherung eines Kollisionspartners als auch die Berührung des Kollisionspartners mit der Außenhülle zu erfassen, indem eines Änderung des Stromflusses bzw. der Kapazität von der Auswerteeinheit gemessen wird, wobei diese Änderung bei einer Annährung sehr klein ist, während sie bei Berührung ihren Maximalwert erreicht.

In dem beidseitig-kapazitiven Kollisionsmodus wird die Kapazität zwischen der oberen und der unteren Elektrode gemessen. Wenn sich durch eine Kollision der Abstand zwischen den Elektroden ändert, wirkt sich das wiederum als eine Änderung in der Kapazität bzw. im Wechsel-Stromfluss aus, welche von der Auswerteeinheit gemessen werden kann. Diese Änderung ist deutlich größer als die Änderung beim kapazitiv-taktilen Modus.

Im bestimmungsgemäßen Gebrauch der Schutzeinrichtung wird der Sicherheitsüberzug derart über dem Bauteil angebracht, dass die Unterseite bzw. Innenfläche des Sicherheitsüberzuges, d. h. der die Elektrode der Unterseite des Abstandskörpers abdeckende Bereich der Außenhülle, die Kollisionsschutzfläche kontaktiert, wobei der Sicherheitsüberzug derart angeordnet ist, dass von ihm die Kollisionsschutzfläche flächig überspannt ist. Zum Beispiel kann vorgesehen sein, dass von dem Sicherheitsüberzug eine Fläche des Bauteils (z. B. die gesamte Oberfläche des Bauteils) einschließlich Rundungen, Schrägen, Ecken und/oder Kanten derselben flächig überspannt ist.

Indem die mit einem Sicherheitsüberzug zu versehende Kollisionsschutzfläche dem Bauteil formangepasst überspannt ist, kann bei beliebiger Form der Kollisionsschutzfläche eine formangepasste, flächige Kollisionsschutzeinrichtung realisiert werden, sodass bei minimaler Gewichtszunahme ein Schutz bei Kollisionen gewährleistbar ist.

Unter einem kapazitiven Detektieren wird verstanden, dass Messwerte mit Hilfe einer Kapazitätsmessung bzw. einer Kapazitätsänderungsmessung erfasst werden können.

Unter der Detektion bzw. Erfassung von Kollisionsereignissen, d. h. von Kontakten bzw. Stößen, wird im Sinne dieser Erfindung ein kraftauflösendes Wahrnehmen von Taktilität bzw. Stoßereignissen verstanden. Die Detektion von Kollisionsereignissen erfolgt insbesondere unabhängig von der Detektion einer Annäherung.

Ein Kollisionspartner kann ein beliebiger Gegenstand oder Körper und insbesondere auch ein Lebewesen wie z. B. eine Person sein. Ein Kollisionspartner kann auch ein Körperteil eines Lebewesens, z. B. eine Hand oder ein Finger einer Person, sein.

Bei einer Kollision des Bauteils mit einem Kollisionspartner tritt die Außenhülle mit dem jeweiligen Kollisionspartner in Wechselwirkung und überträgt den Kollisionsdruck bzw. die Kollisionskraft (direkt) auf die elastisch verformbare Elektrode der Oberseite und diese überträgt den Kollisionsdruck bzw. die Kollisionskraft weiter auf den elastisch verformbaren Abstandskörper. Dieser gibt elastisch nach, wobei aufgrund der höheren Elastizität des Abstandskörpers an seiner Oberseite dem Kollisionspartner zunächst nur eine geringe Gegenkraft entgegengebracht wird. Erst wenn diese geringe Gegenkraft nicht ausreicht, den Kollisionspartner zu stoppen, wird der Abstandskörper tiefer eingedrückt bzw. stärker zusammengepresst, wobei aufgrund der geringeren Elastizität des Abstandskörpers im Bereich der Unterseite die auf den Kollisionspartner einwirkende Gegenkraft zunimmt. Somit ist sichergestellt, dass der Kollisionspartner sanft, aber dennoch zuverlässig abgebremst wird. Die Außenhülle bewirkt dabei eine Vergleichmäßigung bzw. flächige Verteilung des Kollisionsdrucks.

Durch das Eindrücken der oberen Elektrode im Falle einer Kollision ändert sich außerdem - zumindest lokal - ihr Abstand in Bezug zu der unteren Elektrode. Dies wiederum hat zur Folge, dass die zwischen beiden Elektroden ausgebildete Kapazität bzw. der Wechselstromwiderstand geringfügig geändert wird. Diese Änderung kann erfasst und mittels der dafür vorgesehenen Auswerteeinheit ausgewertet werden, wobei der Wert der Änderung ein Maß für die Stärke der Kollision ist. Mittels der Auswerteeinheit kann bei Erfassen bzw. Erkennen einer Kollision z. B. ein Warnsignal und/oder ein Steuerungsbefehl an z. B. einen mit einem angetrieben bewegbaren Bauteil verbundenen Motor ausgegeben werden.

Gemäß einer Ausführungsform besteht der Abstandskörper aus einem Abstandstextil - auch als Abstandsgewirk bekannt. Die beiden durch abstandshaltende Verbindungsfäden, sogenannte Polfäden, auf Distanz gehaltenen Warenflächen bzw. textilen Deckflächen des Abstandstextils weisen erfindungsgemäß eine unterschiedliche Härte auf. Die Warenfläche an der Unterseite besteht vorzugsweise aus einem aus dem Stand der Technik bekannten, nachbehandeltem Polyester. Die Warenfläche an der Oberseite hingegen ist vorzugsweise aus einem unbehandelten Polyester gewirkt, der hierdurch vergleichsweise weich bleibt. Die bevorzugte Dicke des Abstandskörpers bei Verwendung eines Abstandstextils beträgt etwa 1 cm.

Gemäß einer alternativen Ausführungsform besteht der Abstandskörper aus Schaummaterial, z. B. Polyurethan-Weichschaum, dessen Porengröße bevorzugt wenigstens 1 mm im Durchmesser beträgt, sodass das Gewicht des Abstandskörpers aufgrund des vergleichsweise großen Porendurchmessers gering bleibt.

Gemäß dieser Ausführungsform kann vorgesehen sein, dass die mittlere Porengröße von der Unterseite des Abstandskörpers in Richtung zu der Oberseite zunimmt, d. h., die erste Schicht an der Unterseite und die zweite Schicht an der Oberseite des Abstandskörpers besitzen keine scharfen Grenzflächen hin zum Kern des Abstandskörpers, wobei die Zunahme der mittleren Porengröße insbesondere weitestgehend stetig verlaufen kann.

Gemäß dieser Ausführungsform kann jedoch auch vorgesehen sein, dass der Abstandskörper aus wenigstens zwei, scharf gegeneinander abgegrenzten, stoffschlüssig miteinander verbundenen Schichten Polyurethan-Weichschaum besteht, d. h., die erste Schicht an der Unterseite und die zweite Schicht an der Oberseite des Abstandskörpers besitzen jeweils eine scharfe Grenzflächen hin zum Kern des Abstandskörpers, wobei jede Schicht eine im Vergleich zur benachbarten Schicht unterschiedliche Elastizität aufweist. Insbesondere kann vorgesehen sein, dass die mittlere Porengröße der Schicht an der Unterseite des Abstandskörpers kleiner ist als die mittlere Porengröße der Schicht an der Oberseite.

Gemäß einer Ausführungsform besteht die Außenhülle aus einem elastisch verformbaren Material, z. B. aus einem (im Wesentlichen) inkompressiblen elastisch verformbaren Material. Zum Beispiel kann die Außenhülle aus einem elastisch verformbaren Material wie Echt- oder Kunstleder bestehen.

Es kann auch vorgesehen sein, die Außenhülle aus einem elastisch komprimierbaren Material, z. B. aus einem Schaummaterial oder einem gummielastischen Material, auszubilden. Gemäß dieser Ausführungsform kann die Außenhülle bei einer Kollision als dämpfendes, kraftaufnehmendes Element zum Schutz des Kollisionspartners vor Beschädigung wirken.

Gemäß einer Ausführungsform weist die Außenhülle eine geringere Elastizität auf als der Abstandskörper, verformt sich also bei gleicher Druckeinwirkung weniger als der Abstandskörper. Zum Beispiel kann das Material der Außenhülle einen größeren Kompressionsmodul aufweisen als das Material des Abstandskörpers.

Bevorzugt ist die Außenhülle ein mit 2K-PU-Lack beschichteter, elastisch verformbarer Polyurethan-Weichschaum, ein Kunstleder oder ein Textilstoff, wobei letztere zusätzlich noch lackiert oder beschichtet sein können.

Die Erfindung kann weiter derart ausgebildet sein, dass die Elektroden eine elektrisch leitfähige Folie aus einem Kunststoff, z. B. Polyethylen, einem Silikon oder einem Polyurethan-Weichschaum sind, in die jeweils ganzflächig oder in dedizierten Bereichen, z. B. mäandrierende Bahnen, Graphit eingebracht ist.

Die Elektroden können auch in Form von Leiterbahnen vorliegen, die in Form eines Musters, z. B. als Mäander oder Gitter, auf die Abstandsschicht aufgebracht sind. Insbesondere die Elektrode an der Oberseite können auch als z. B. verwebte leitfähige Fäden, beispielsweise Metallfäden oder dünne Drähte, vorliegen.

Weiterhin kann vorgesehen sein, dass die Außenhülle und die Elektroden eine höhere Elastizität aufweisen als der Abstandskörper.

Es kann auch vorgesehen sein, den Sicherheitsüberzug entsprechend einer geometrischen Außenkontur des Bauteils auszuformen, sodass der Sicherheitsüberzug formschlüssig auf dem Bauteil bzw. dessen Kollisionsschutzfläche aufbringbar ist, ohne ihn übermäßig verbiegen zu müssen.

Zur besseren Haftung bzw. Fixierung des Sicherheitsüberzuges auf dem Bauteil kann an der Unterseite, d. h. Innenfläche, des Sicherheitsüberzuges ein rutschfester Belag angeordnet sein, wobei dieser rutschfeste Belag zur besseren Belüftung auch nur an eng begrenzten, vorgegebenen Positionen, z. B. punktweise, aufgebracht sein kann.

Gemäß einer Ausführungsform sind die Befestigungsmittel auf oder an der Außenhülle angebracht. Die Befestigungsmittel sind z. B. als Klettverschlüsse oder als allgemein bekannte Schnappverschlüsse ausgebildet, mittels derer ein einstückiger Sicherheitsüberzug z. B. in einer Hohlzylinderform fixierbar oder mehrere Sicherheitsüberzüge z. B. zu einem Hohlzylinder zusammenfügbar sind. Zusätzlich oder alternativ kann die Außenhülle zur Befestigung des Sicherheitsüberzuges direkt auf dem Bauteil auf demjenigen Oberflächenbereich, der mit dem Bauteil in Kontakt kommt, mehrere kleinflächige Befestigungsmittel, z. B. Druckknöpfe, aufweisen.

Die Erfindung wird nachfolgend anhand von Ausführungsbeispielen mit Bezug auf die beiliegenden Zeichnungen erläutert, wobei gleiche oder ähnliche Merkmale mit gleichen Bezugszeichen versehen sind; hierbei zeigen schematisch:
- Figur 1: eine perspektivische Darstellung einer Schutzeinrichtung gemäß einer Ausführungsform der Erfindung; und
- Figur 2: eine perspektivische Darstellung einer Schutzeinrichtung gemäß einer weiteren Ausführungsform.

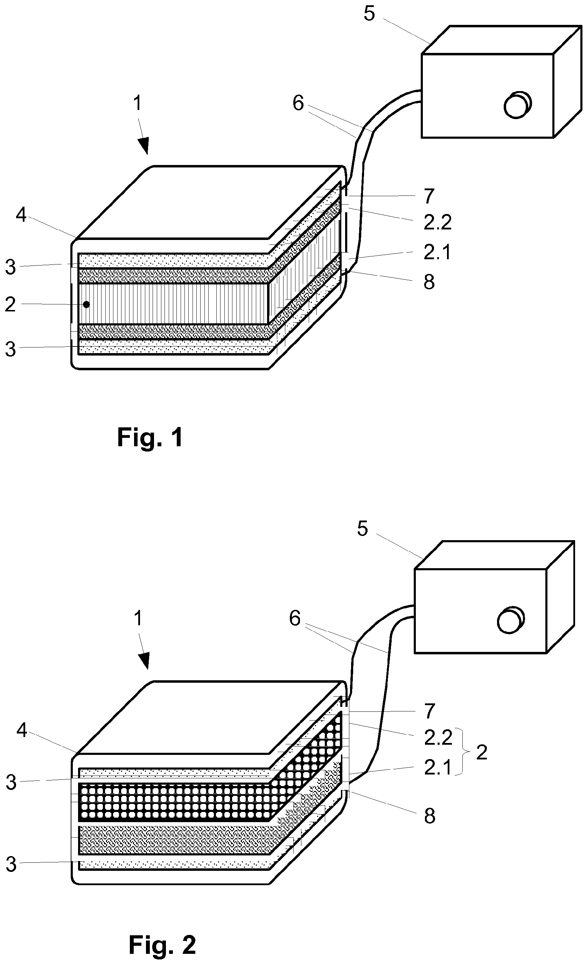

Gemäß den Figuren 1 und 2 weist die Schutzeinrichtung den Sicherheitsüberzug 1 sowie die Auswerteeinheit 5 auf.

Der Sicherheitsüberzug 1 umfasst die elektrisch isolierende Außenhülle 4, die den Abstandskörper 2 und die auf der Oberseite 7 und der Unterseite 8 des Abstandskörpers 2 aufgebrachten Elektroden 3 vollständig einhüllt. Die Elektroden 3 sind mittels der elektrischen Leitungen 6 mit der Auswerteeinheit 5 verbunden.
Der Abstandskörper 2 des Sicherheitsüberzuges 1 gemäß Figur 1 besteht aus einem Abstandstextil, dessen obere Warenfläche 2.2 eine geringere Härte ausweist als dessen untere Warenfläche 2.1.

Der Abstandskörper 2 des Sicherheitsüberzuges 1 gemäß Figur 2 besteht aus zwei, scharf gegeneinander abgegrenzten Schichten 2.1 und 2.2 aus jeweils einem Polyurethan-Weichschaum. Die erste, obere Schicht 2.2 ist hierbei durch einen im Vergleich zu dem Polyurethan-Weichschaum der zweiten, unteren Schicht 2.1 fast doppelt so großen Porendurchmesser des Schaumes gekennzeichnet, weswegen die obere Schicht 2.2 weicher als die untere Schicht 2.1 ist.

### Liste der verwendeten Bezugszeichen

- 1: Sicherheitsüberzug
- 2: Abstandskörper
- 2.1: erste Schicht
- 2.2: zweite Schicht
- 3: Elektrode
- 4: Außenhülle
- 5: Auswerteeinheit
- 6: elektrische Verbindung
- 7: Oberseite
- 8: Unterseite

## Patentansprüche

1. Schutzeinrichtung mit kapazitiv-taktiler Kollisionserfassung für ein Bauteil zum Schutz bei einer Kollision und zur Überwachung einer Berührung des Bauteils, aufweisend einen flexiblen, zumindest auf einen Teil der Oberfläche des Bauteils formangepasst aufbringbaren, elastisch komprimierbaren Sicherheitsüberzug (1) und eine Auswerteeinheit (5), **dadurch gekennzeichnet, dass**
- der Sicherheitsüberzug (1) einen einteiligen, flächenhaft ausgebildeten Abstandskörper (2) aus einem elastisch komprimierbaren Material mit einer Ober- (7) und einer Unterseite (8) beinhaltet,
- wobei der Abstandskörper (2) aus wenigstens zwei Schichten unterschiedlicher Elastizität besteht, von denen die an der Unterseite (8) angeordnete, erste Schicht (2.1) eine geringere Elastizität als die an der Oberseite (7) angeordnete, zweite Schicht (2.2) aufweist, und
- wobei auf die Ober- (7) und die Unterseite (8) des Abstandskörpers (2) jeweils ganzflächig eine elastisch verformbare Elektrode (3) aufgebracht ist, die mit dem Abstandskörper (2) stoffschlüssig verbunden sind;
- eine elastisch verformbare Außenhülle (4) den Abstandskörper (2) mit den darauf aufgebrachten Elektroden (3) flüssigkeitsdicht umschließt; und
- die Auswerteeinheit mit den beiden Elektroden (3) elektrisch verbunden ist, wobei von der Auswerteeinheit eine elektrische Spannung mit für jede Elektrode (3) unterschiedlicher Polarität auf die Elektroden (3) aufbringbar ist, und
- die Auswerteeinheit eingerichtet ist, eine Änderung der zwischen den beiden Elektroden (3) ausgebildeten elektrischen Kapazität und/oder eines Wechselstromflusses zu erfassen.

2. Schutzeinrichtung nach Anspruch 1, **dadurch gekennzeichnet, dass** der Abstandskörper (2) ein Abstandstextil ist, dessen Warenfläche an der Unterseite (8) die erste Schicht (2.1) und dessen Warenfläche an der Oberseite (7) die zweite Schicht (2.2) bildet, wobei die Warenfläche an der Unterseite (8) härter ist als die Warenfläche an der Oberseite (7).

3. Schutzeinrichtung nach Anspruch 1, **dadurch gekennzeichnet, dass** der Abstandskörper (2) aus Polyurethan-Weichschaum besteht, dessen Porengröße wenigstens 1 mm im Durchmesser beträgt.

4. Schutzeinrichtung nach Anspruch 3, **dadurch gekennzeichnet, dass** die Porengröße von der Unterseite (8) des Abstandskörpers (2) in Richtung zu der Oberseite (7) stetig zunimmt.

5. Schutzeinrichtung nach Anspruch 3, **dadurch gekennzeichnet, dass** der Abstandskörper (2) aus wenigstens zwei, stoffschlüssig miteinander verbundenen Schichten (2.1, 2.2) Polyurethan-Weichschaum mit jeweils unterschiedlicher Elastizität besteht.

6. Schutzeinrichtung nach einem der vorstehenden Ansprüche, **dadurch gekennzeichnet, dass** die Außenhülle (4) aus einem elastisch verformbaren Echt- oder Kunstleder oder einem Polyurethan-Weichschaum besteht, dessen äußere Oberfläche eine Deckschicht aus hochflexiblem 2K-PU-Lack aufweist.

7. Schutzeinrichtung nach einem der vorstehenden Ansprüche, **dadurch gekennzeichnet, dass** die Elektrode (3) aus einem Kunststoff, einem Polyurethan-Weichschaum oder aus Silikon besteht, in welche jeweils Graphit eingebracht ist.

8. Schutzeinrichtung nach einem der vorstehenden Ansprüche, **dadurch gekennzeichnet, dass** die Außenhülle (4) und die Elektroden (3) eine höhere Elastizität aufweisen als der Abstandskörper (2).

9. Schutzeinrichtung nach einem der vorstehenden Ansprüche, **dadurch gekennzeichnet, dass** die Außenhülle (4) auf demjenigen Teilbereich ihrer äußeren Oberfläche, der in Kontakt mit dem Bauteil bringbar ist, kleinflächige Befestigungsmittel aufweist.

10. Schutzeinrichtung nach einem der vorstehenden Ansprüche, **dadurch gekennzeichnet, dass** von der Auswerteeinheit eine elektrische Wechselspannung auf wenigstens eine der Elektroden (3) aufbringbar ist.

11. Schutzeinrichtung nach einem der Ansprüche 1 bis 9, **dadurch gekennzeichnet, dass** von der Auswerteeinheit eine elektrische Gleichspannung auf die Elektroden (3) aufbringbar ist.
